# EUROPÄISCHE PATENTSCHRIFT

(11) **EP 3 977 850 B1**
(45) Veröffentlichungstag und Bekanntmachung des Hinweises auf die Patenterteilung: **29.05.2024**
(21) Anmeldenummer: 21186917.7
(22) Anmeldetag: 21.07.2021
(51) Int. Cl.: A01M 21/00

(54) **VORRICHTUNG ZUR VERNICHTUNG VON UNKRAUT**
WEED KILLING DEVICE
DISPOSITIF DE DESTRUCTION DES MAUVAISES HERBES

(30) Priorität: 30.09.2020 AT 2232020
(43) Veröffentlichungstag der Anmeldung: 06.04.2022
(73) Patentinhaber: KECKEX GmbH, 6832 Sulz (AT)
(72) Erfinder: Keckeis, Michael, 6830 Rankweil (AT)
(74) Vertreter: Torggler & Hofmann Patentanwälte - Rankweil

(56) Entgegenhaltungen:
- WO-A1-2019/134050
- JP-A- 2003 000 129
- US-A- 6 073 859
- US-A1- 2012 288 333

## Beschreibung

Die Erfindung bezieht sich auf eine Vorrichtung zur Vernichtung von Unkraut, umfassend einen Boiler zum Aufheizen von Wasser und eine Ausbringungsvorrichtung zur Ausbringung von Heißwasser auf zu vernichtendes Unkraut, welche in eine Fahrtrichtung über einen das zu vernichtende Unkraut aufweisenden Untergrund bewegbar ist, wobei die Ausbringungsvorrichtung mindestens eine flexible Schürze aufweist, welche an einem oberen Ende an einer Tragstruktur der Vorrichtung aufgehängt ist und im Betriebszustand der Vorrichtung, in welchem sie in die Fahrtrichtung über den Untergrund geschleppt wird, mit einem unteren Endabschnitt auf dem Untergrund aufliegt, wobei mindestens ein Heißwasserkanal an der Unterseite dieses unteren Endabschnitts der Schürze mündet.

Es ist bekannt, Unkraut durch Aufspritzen von Heißwasser zu vernichten. Zu diesem Zweck dienende Vorrichtungen sind beispielsweise aus der US 5,927,601 A und der EP 1 768 489 B1 bekannt. In der erstgenannten Schrift ist ein von Rädern getragenes Rohr gezeigt, das an seiner Unterseite eine Mehrzahl von Öffnungen zum Austritt des Heißwassers aufweist, wobei das Rohr in eine Fahrtrichtung über einen Untergrund verfahren wird und sich hierbei quer zur Fahrtrichtung erstreckt. In ähnlicher Weise weist die aus der EP 1 768 489 B1 bekannte Vorrichtung ein Rohr mit an der Unterseite angeordneten Öffnungen zum Austritt von Heißwasser auf. Zur Verbesserung der Isolierung der Umgebung dient eine Abdeckung für dieses Rohr, welche nach unten abstehende seitliche Schürzen aufweist.

Probleme bei bekannten Vorrichtungen zur Unkrautvernichtung mittels Heißwasser bestehen darin, dass der Wasserverbrauch und damit Energiebedarf hoch ist und dass die Geschwindigkeit, mit welcher die Vorrichtung verfahren werden kann, um eine effektive Unkrautvernichtung zu bewirken, gering ist. Dies trifft insbesondere im Fall von Unebenheiten des Untergrunds zu bzw. ist in diesem Fall eine effektive Unkrautvernichtung nicht mehr möglich.

Eine Vorrichtung der eingangs genannten Art geht aus der US 2005/0223638 A1 hervor. Zur Bekämpfung von Unkraut mittels Heißwasser wird eine Matte bzw. Schürze an ihrem vorderen Ende aufgehängt und liegt anschließend an diesem vorderen Endabschnitt auf dem Untergrund auf. An der Unterseite der Matte münden Heißwasserkanäle. Eine Anpassung an Unebenheiten des Bodens ist nur begrenzt möglich, wodurch die Effektivität der Unkrautvernichtung verringert sein kann.

Aus der JP 2003 000129 A geht eine Vorrichtung hervor, welche einen Boiler aufweist, der in einem Transportbehälter angeordnet ist, der zum Einsatzort gefahren werden kann. Es sind mehrere Folienbahnen vorhanden, die jeweils von einer Aufwickel-Achse abgezogen werden können und überlappend auf dem Untergrund, der das zu vernichtende Unkraut aufweist, ausgelegt werden. Die Folienbahnen weisen an ihren Unterseiten Sprühschläuche auf, welche über Verbindungsschläuche mit dem Boiler verbunden werden. Das Bearbeiten von größeren Flächen ist aufgrund des erforderlichen Umsetzens der Folienbahnen mühsam.

Weitere Vorrichtungen zur Unkrautbekämpfung mittels Heißwasser gehen aus der US 2012/288333 A1, US 6,073,859 A und WO 2019/134050 A1 hervor.

Aufgabe der Erfindung ist es eine vorteilhafte Vorrichtung der eingangs genannten Art bereitzustellen, welche bei einer effektiven Unkrautvernichtung eine relativ hohe Geschwindigkeit ermöglicht, mit der die Vorrichtung über den Untergrund verfahren wird, und welche einen effizienten Einsatz des ausgebrachten Heißwassers ermöglicht. Eine erfindungsgemäße Vorrichtung soll zweckmäßigerweise auch bei einem unebenen Untergrund vorteilhaft einsetzbar sein. Erfindungsgemäß gelingt dies durch eine Vorrichtung mit den Merkmalen des Anspruchs 1.

Die Vorrichtung gemäß der Erfindung ist im Anspruch 1 definiert.

Dadurch, dass die Schürzen mit unteren Endabschnitten auf dem Untergrund aufliegen und an der Unterseite dieses jeweiligen unteren Endabschnitts mindestens ein Heißwasserkanal mündet, wird eine vorteilhafte thermische Isolierung des ausgebrachten Heißwassers erreicht. Die flexiblen Schürzen können sich hierbei vorteilhaft an Unebenheiten des Untergrundes anpassen. Insgesamt kann eine effektive Unkrautvernichtung erreicht werden, wobei eine relativ hohe Fahrgeschwindigkeit ermöglicht wird, mit welcher die Schürzen über den Untergrund geschleppt werden.

In einer vorteilhaften Ausführungsform der Erfindung ist eine jeweilige Schürze in der Breite durch mindestens einen vom unteren Ende der Schürze über einen Teil der Länge der Schürze sich erstreckenden Schlitz in mindestens zwei an ihr unteres Ende anschließende Teilbereiche unterteilt. Hierbei mündet in jedem Teilbereich mindestens ein Heißwasserkanal an der Unterseite des jeweiligen Teilbereichs. Die Anpassbarkeit der Schürze an Unebenheiten des Untergrundes kann dadurch weiter verbessert werden.

Eine vorteilhafte Ausführungsform der Erfindung sieht vor, dass mindestens ein Verteiler vorgesehen ist, der einen Verteilerraum besitzt, in welchem ein Zuführkanal für Heißwasser mündet und von welchem mehrere Heißwasserkanäle ausgehen, deren Öffnungsquerschnitte kleiner sind als der Öffnungsquerschnitt des Zuführkanals. Das durch den Zuführkanal zugeführte Heißwasser kann somit in einfacher Weise auf mehrere an der Unterseite von mindestens einer der Schürzen mündende Heißwasserkanäle aufgeteilt werden.

Eine besonders effiziente Unkrautvernichtung kann erreicht werden, wenn mindestens eine Kamera vorgesehen ist, deren erfasstes Bild einer Steuereinheit, welche mindestens einen Mikroprozessor aufweist, ausgewertet wird, um vorhandenes Unkraut zu erkennen. Von der Steuereinheit können in Abhängigkeit von erkanntem Unkraut Ventile betätigt werden, um die Zufuhr von Heißwasser zu den Heißwasserkanälen zu steuern. So kann, wenn kein vorhandenes Unkraut in einem Bereich erkannt wird, die Heißwasserzufuhr zu den Heißwasserkanälen, die diesem Bereich zugeordnet sind, gedrosselt oder ganz gesperrt werden.

Wenn in dieser Schrift von "vorne" und "hinten" die Rede ist, so ist dies auf die Fahrtrichtung bezogen, in welche die Vorrichtung im Betrieb verfahren wird.

Weitere Vorteile und Einzelheiten der Erfindung werden im Folgenden anhand der beiliegenden Zeichnung erläutert. In dieser zeigen:
- Fig. 1: eine Seitenansicht einer Vorrichtung gemäß einem Ausführungsbeispiel der Erfindung;
- Fig. 2: eine Vorderansicht der Vorrichtung;
- Fig. 3: eine Vorderansicht eines Ausschnitts von Fig. 2;
- Fig. 4: einen Schnitt entlang der Linie A-A von Fig. 3;
- Fig. 5: eine Rückansicht des Ausschnitts von Fig. 2;
- Fig. 6: eine Schrägsicht eines Verteilers;
- Fig. 7: eine Seitenansicht des Verteilers;
- Fig. 8: einen Schnitt entlang der Linie B-B von Fig. 7.

Die Figuren sind vereinfacht und teilweise schematisiert.

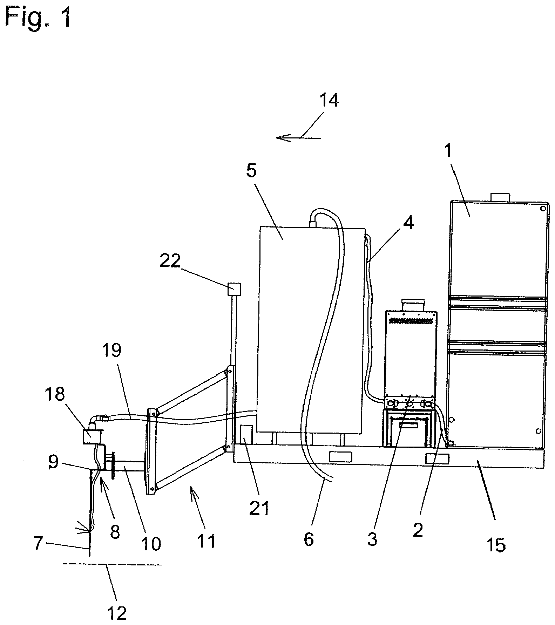

Ein Ausführungsbeispiel der Erfindung wird im Folgenden anhand der Fig. 1 bis 8 erläutert. Die Vorrichtung weist einen Wassertank 1 auf, in welchem Wasser gespeichert ist, dessen Temperatur im Allgemeinen Umgebungstemperatur aufweisen wird. Vom Wassertank entnommenes Wasser wird über einen Schlauch 2 einem Boiler 3 zugeführt, in welchem das Wasser erhitzt wird. Der Boiler 3 kann beispielsweise einen mit Diesel, Heizöl oder alternativen Brennstoffen befeuerten Brenner aufweisen. Auch eine Aufheizung mit einer elektrisch betriebenen Heizeinrichtung ist denkbar und möglich.

Im Boiler 3 aufgeheiztes Wasser wird über einen Schlauch 4 einem Speicher 5 zugeführt. Das vom Speicher 5 aufgenommene Heißwasser weist im Ausführungsbeispiel Umgebungsdruck auf. Hierzu kann an der Oberseite eine Entlüftungsöffnung vorgesehen sein, an der im Ausführungsbeispiel ein Schlauch 6 angeschlossen ist.

Das im Speicher 5 aufgenommene Heißwasser weist eine Temperatur von mehr als 85° C auf. Günstigerweise liegt die Temperatur des Heißwassers im Speicher 5 im Bereich von 90° C bis 110° C.

Um Unkraut zu vernichten, wird vom Speicher 5 entnommenes Heißwasser über eine Ausbringungsvorrichtung dem zu vernichtenden Unkraut zugeführt. Diese Ausbringungsvorrichtung weist mehrere flexible (= biegbare) Schürzen 7 auf, die in einer Reihe nebeneinander angeordnet sind und im Betrieb der Einrichtung in eine Fahrtrichtung 14 über einen Untergrund 12 geschleppt werden.

An ihren oberen Enden sind die Schürzen 7 an einer Tragstruktur 8 aufgehängt. Die oberen Ränder der Schürzen 7 verlaufen hierbei quer, insbesondere rechtwinkelig zur Fahrtrichtung 14.

Die Reihe der nebeneinander angeordneten Schürzen 7 erstreckt sich quer, insbesondere rechtwinkelig, zur Fahrtrichtung 14.

Die Tragstruktur kann wie dargestellt Winkel 9 aufweisen, an deren nach unten gerichteten Schenkel die Schürzen an ihren oberen Enden befestigt sind und deren horizontaler Schenkel an einem Träger 10 befestigt ist. Der Träger 10 kann mittels eines Hubwerks 11 in der Höhe verstellt werden.

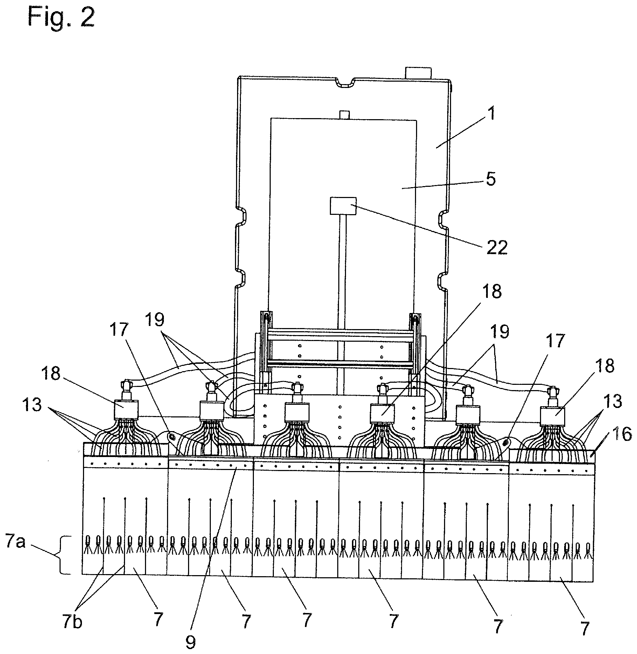

Im Ruhezustand der Vorrichtung sind die Schürzen 7 angehoben, wobei sich ihre unteren Enden oberhalb des Untergrundes 12 befinden. Die Schürzen 7 liegen dann vorzugsweise in einer Ebene, die quer, insbesondere rechtwinkelig, zur Fahrtrichtung 14 liegt. Dieser Ruhezustand der Vorrichtung ist in den Figuren 1 und 2 dargestellt.

Die Schürzen 7 weisen im angehobenen Zustand in Vorderansicht gesehen vorzugsweise eine rechteckige Kontur auf.

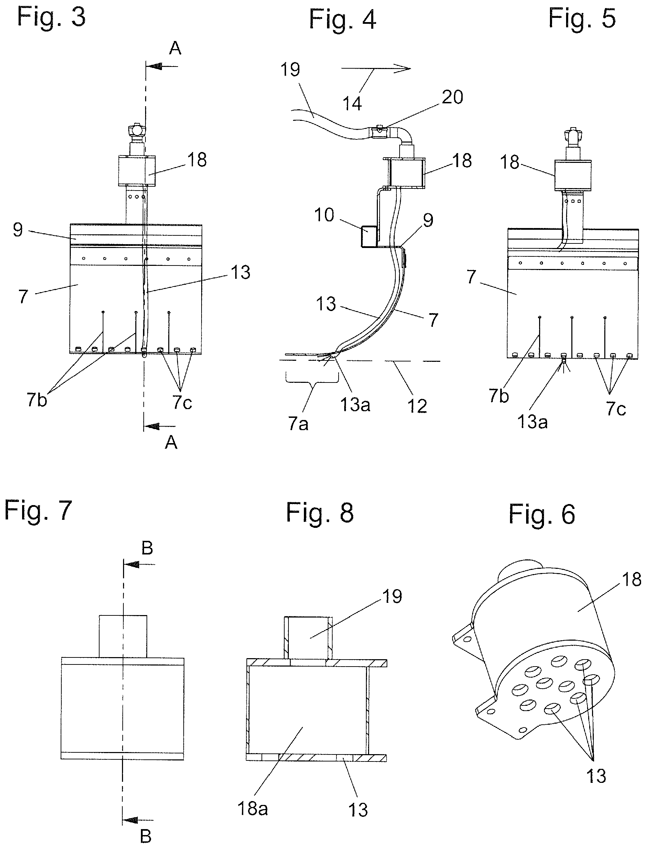

Im Betriebszustand, in welchem die Schürzen 7 abgesenkt sind und über den Untergrund 12 geschleppt werden, kommt aufgrund der Flexibilität der Schürzen ein unterer Endabschnitt 7a zur Anlage am Untergrund 12. Die Schürzen sind also so biegeschlaff, dass dieser Endabschnitt einer jeweiligen Schürze aufgrund des Eigengewichts der Schürze also, wenn der Untergrund horizontal verläuft, ebenfalls in einer zumindest im Wesentlichen horizontalen Ebene (in Anlage am Untergrund) zu liegen kommt. Die unteren Endabschnitte der Schürzen liegen somit im Betriebszustand zumindest im Wesentlichen parallel zur Fahrtrichtung 14. Dieser Betriebszustand ist für einen der Schürzen in den Fig. 3 bis 5 dargestellt.

Die Schürzen 7 könnten auch als Laschen, Lappen, Vorhänge oder flexible Ziehschilder bezeichnet werden.

An der Unterseite des im Betriebszustand auf dem Untergrund 12 aufliegenden unteren Endabschnitts einer jeweiligen Schürze 7 liegen Austrittsöffnungen 13a von Heißwasserkanälen 13, durch welche im Betrieb Heißwasser zugeführt wird.

Wie dargestellt, münden an der Unterseite einer jeweiligen Schürze 7 vorzugsweise mehrere Heißwasserkanäle 13. Insbesondere sind mehrere Heißwasserkanäle 13 vorgesehen, deren Austrittsöffnungen 13a bezogen auf die Richtung quer, insbesondere rechtwinkelig zur Fahrtrichtung 14 beabstandet nebeneinander liegen.

Im angehobenen Zustand der Schürzen 7, in welchem deren untere Enden oberhalb des Untergrunds liegen, befinden sich die Austrittsöffnungen 13a der Heißwasserkanäle 13 somit auf den Vorderseiten der Schürzen 7 (bezogen auf die Fahrtrichtung 14) .

Im Ausführungsbeispiel weist eine jeweilige Schürze 7 mehrere vom unteren Ende der Schürze ausgehende und über ein Teil ihrer Höhe sich erstreckende Schlitze 7b auf. Die Schürze 7 ist dadurch in mehrere, durch die Schlitze 7b getrennte Teilbereiche unterteilt, wobei in jedem Teilbereich mindestens ein Heißwasserkanal 13 mündet. Im Ausführungsbeispiel münden in jedem Teilbereich zwei Heißwasserkanäle 13, die in die Richtung quer, insbesondere rechtwinkelig, zur Fahrtrichtung 14 voneinander beabstandet sind.

Im gezeigten Ausführungsbeispiel sind die beiden randseitigen Schürzen 7 hinaufschwenkbar. Die diese Schürzen tragenden Tragstücke 16 sind dazu mit dem mittleren Teil der Tragstruktur um eine parallel zur Fahrtrichtung 14 liegende Achse 17 verschwenkbar verbunden. Im hinaufgeschwenkten Zustand der randseitigen Schürzen 7 sind die diesen Schürzen zugeordneten Heißwasserkanäle 13 deaktiviert. Die Wirkungsbreite der Vorrichtung kann dadurch an die gewünschten Verhältnisse angepasst werden.

Im hinaufgeschwenkten Zustand der seitlichen Schürzen 7 grenzen die dazwischen liegenden mittleren Schürzen 7 vorzugsweise direkt aneinander an, d.h. sie berühren sich mit ihren Schmalseiten oder es liegt zwischen den einzelnen Schürzen nur ein kleiner Spalt vor. Im hinuntergeschwenkten Zustand der seitlichen Schürzen 7 überlappen diese randseitig ein wenig mit der jeweils benachbarten der mittleren Schürzen, wobei sie hinter dieser liegen.

Die Möglichkeit des Hinaufschwenkens der randseitigen Schürzen 7 kann auch entfallen.

Der Wassertank 1, Boiler 3 und Speicher 5 sind auf einem Traggestell 15 angeordnet, an welchem vorne das Hubwerk 11 angebracht ist.

Um Heißwasser aus dem Speicher 5 den Heißwasserkanälen 13 zuzuführen, sind Verteiler 18 vorhanden. Jeder der Verteiler 18 ist über einen Zuführkanal 19 mit dem Speicher 5 verbunden. Ein jeweiliger Verteiler 18 weist einen innen liegenden Verteilerraum 18a auf, in welchen der Zuführkanal 19 mündet. Vom Verteilerraum 18a gehen mehrere Heißwasserkanäle 13 aus. In Fig. 3 und 5 ist der Einfachheit halber nur einer der vom Verteiler 18 ausgehenden Heißwasserkanäle 13 dargestellt.

Die Öffnungsquerschnitte (=Innendurchmesser) der Heißwasserkanäle 13 sind kleiner als der Öffnungsquerschnitt (=Innendurchmesser) des Zuführkanals 19. Durch die richtige Auslegung der Öffnungsquerschnitte und des Volumens des Verteilerraums kann erreicht werden, dass den Heißwasserkanälen 13 zumindest im Wesentlichen gleiche Wassermengen zugeführt werden.

Die Zufuhr von Heißwasser durch die Zuführkanäle 19 in die Heißwasserkanäle 13 kann durch die Schwerkraft bewirkt werden.

Die Heißwasserkanäle 13 werden zumindest in den Bereichen, in welchen sie entlang der jeweiligen Schürze 7 geführt sind, von flexiblen Schläuchen gebildet. Vorzugsweise werden sie insgesamt von flexiblen Schläuchen gebildet.

Die Zuführkanäle 19 werden vorzugsweise von flexiblen Schläuchen gebildet.

Im Ausführungsbeispiel ist jeder der Schürzen 7 gerade ein Verteiler 18 zugeordnet.

In jedem der Zuführkanäle 19 ist ein Ventil 20 angeordnet. Im Ausführungsbeispiel sind die Ventile 20 als Absperrventile ausgebildet, d.h. der Fluss durch den Zuführkanal 19 kann durch das Ventil 20 abgesperrt oder freigegeben werden. Eine Ausbildung als Regelventile wäre denkbar und möglich.

Durch die Ventile 20 kann somit der Fluss durch einen Teil der Heißwasserkanäle 13 unterbrochen bzw. (in einer Ausführung mit Regelventilen) gedrosselt werden. Es kann dadurch in Bereichen des Untergrundes 12, in welchen sich kein oder nur wenig Unkraut befindet, die Ausbringung von Heißwasser unterbunden oder gedrosselt werden. Dies kann manuell durch einen Benutzer erfolgen. In einer bevorzugten Ausführungsform der Erfindung erfolgt dies aber automatisiert. Es ist hierzu eine Steuereinheit 21 vorgesehen, welche mindestens einen Mikroprozessor aufweist. Die Steuereinheit 21 ist mit mindestens einer Kamera 22 verbunden. Von der Kamera 22 wird ein Bild von einem vor den Schürzen 7 liegenden Bereich des Untergrunds 12 aufgenommen. Dieses erfasste Bild, d.h. die das Bild repräsentierenden Daten, werden an die Steuereinheit 21 übermittelt und von dieser ausgewertet. Von der Steuereinheit 21 kann dadurch ermittelt werden, in welchen Bereichen des Untergrundes sich Unkraut befindet. Die Steuereinheit 21 kann hierzu insbesondere eine Farbauswertung durchführen. Entsprechende Algorithmen sind bekannt, beispielsweise aus der chemischen Unkrautbekämpfung. Ein solcher Algorithmus ist bevorzugterweise selbstlernend.

In Abhängigkeit von durch die Steuereinheit 21 erkanntem Unkraut kann die Steuereinheit 21 die Ventile 20 betätigen, sodass Heißwasserleitungen, für Bereiche, in denen wenig oder kein Unkraut erkannt wird, gedrosselt oder abgesperrt werden.

Die Verbindung der Steuereinheit 21 mit den Ventilen 20 und der mindestens einen Kamera 22 kann über (nicht dargestellte) Verbindungsleitungen oder drahtlos erfolgen.

Um die Heißwasserkanäle 13 beim Schleppen der Schürzen 7 über den Untergrund 12 nicht zu beschädigen, verlaufen die Heißwasserkanäle 13 bis kurz vor ihren Austrittsöffnungen 13a bezogen auf die Fahrtrichtung 14 hinter den Schürzen 7 und treten in einem Endabschnitt durch Öffnungen 7c der Schürzen 7 durch diese hindurch, sodass die Austrittsöffnungen 13a im Betriebszustand der Vorrichtung unterhalb der unteren Endabschnitte 7a liegen, vgl. insbesondere Fig. 4.

Die Vorrichtung könnte auch mehr als einen Boiler 3 und/oder Speicher 5 aufweisen.

Grundsätzlich denkbar und möglich wäre es, auf einen Speicher 5 zu verzichten, sodass das Heißwasser direkt von mindestens einen Boiler 3 der Ausbringungsvorrichtung zugeführt wird.

Es könnten, bezogen auf den Betriebszustand, auch Heißwasserkanäle 13 vorgesehen sein, deren Austrittsöffnungen 13a im Betriebszustand in Fahrtrichtung 14 beabstandet zueinander an den Unterseiten der unteren Endabschnitte 7a liegen. Diese Heißwasserkanäle wären dann bezogen auf den angehobenen Zustand der Schürzen 7 (= Ruhezustand der Vorrichtung) mit ihren Austrittsöffnungen 13a in der Höhe zueinander versetzt.

Die Schürzen 7 bestehen vorzugsweise aus einem biegbaren (=flexiblen) Kunststoffmaterial, beispielsweise Kautschukmaterial. Die Dicke der Schürzen liegt günstigerweise im Bereich von 4 mm bis 50 mm, bevorzugt im Bereich von 5 mm bis 10 mm.

Die Wassertemperatur bei den Austrittsöffnungen 13a liegt vorteilhafterweise oberhalb von 85° C, um eine effektive Unkrautbekämpfung zu erreichen.

Die Innendurchmesser der Heißwasserkanäle 13 liegen günstigerweise im Bereich von 5 mm bis 40 mm, bevorzugt im Bereich von 10 mm bis 15 mm.

Die Innendurchmesser der Zuführkanäle 19 liegen vorzugsweise im Bereich von 1/2 Zoll bis 3 Zoll.

Von jedem der Verteiler 18 gehen günstigerweise vier bis fünfzehn Heißwasserkanäle 13 aus, vorzugsweise sechs bis zehn, im Ausführungsbeispiel acht.

In einer modifizierten Ausführungsform der Erfindung könnten die Heißwasserkanäle 13 auch zwischen zwei Lagen einer jeweiligen Schürze 7 verlaufen bzw. im Material der jeweiligen Schürze 7 eingebettet sein. Die Heißwasserkanäle 13 oder zumindest an die Austrittsöffnungen 13a anschließende Endabschnitte der Heißwasserkanäle 13 könnten innerhalb der Schürze auch durch im Material der Schürze 7 selbst ausgebildete Kanäle gebildet werden, also vom Material der Schürze 7 begrenzt werden.

### Legende zu den Hinweisziffern:

- 1: Wassertank
- 2: Schlauch
- 3: Boiler
- 4: Schlauch
- 5: Speicher
- 6: Schlauch
- 7: Schürze
- 7a: unterer Endabschnitt
- 7b: Schlitz
- 7c: Öffnung
- 8: Tragstruktur
- 9: Winkel
- 10: Träger
- 11: Hubwerk
- 12: Untergrund
- 13: Heißwasserkanal
- 13a: Austrittsöffnung
- 14: Fahrtrichtung
- 15: Traggestell
- 16: Tragstück
- 17: Achse
- 18: Verteiler
- 18a: Verteilerraum
- 19: Zuführkanal
- 20: Ventil
- 21: Steuereinheit
- 22: Kamera

## Patentansprüche

1. Vorrichtung zur Vernichtung von Unkraut, umfassend einen Boiler (3) zum Aufheizen von Wasser und eine Ausbringungsvorrichtung zur Ausbringung von Heißwasser auf zu vernichtendes Unkraut, welche in eine Fahrtrichtung (14) über einen das zu vernichtende Unkraut aufweisenden Untergrund (12) bewegbar ist, wobei die Ausbringungsvorrichtung mehrere flexible Schürzen (7) aufweist, welche an oberen Enden an einer Tragstruktur (8) der Vorrichtung aufgehängt sind und im Betriebszustand der Vorrichtung, in welchem sie in die Fahrtrichtung (14) über den Untergrund (12) geschleppt werden, aufgrund ihrer Flexibilität mit einem unteren Endabschnitt (7a) auf dem Untergrund (12) aufliegen, wobei mindestens ein Heißwasserkanal (13) an der Unterseite dieses unteren Endabschnitts (7a) der jeweiligen Schürze (7) mündet und die Schürzen (7) in Richtung rechtwinkelig zur Fahrtrichtung (14) versetzt angeordnet sind und die Vorrichtung derart ausgebildet ist, dass die Schürzen (7) zwischen einem Ruhezustand, in dem die Schürzen (7) angehoben sind, wobei sich die unteren Enden der Schürzen (7) oberhalb des Untergrunds befinden, und dem Betriebszustand verstellbar sind in dem die Schürzen (7) abgesenkt sind, **dadurch gekennzeichnet, dass** die Vorrichtung derart ausgebildet ist, dass die Schürzen (7) im Betriebszustand über den Untergrund (12) geschleppt werden können.

2. Vorrichtung nach Anspruch 1, **dadurch gekennzeichnet, dass** über die quer zur Fahrtrichtung (14) sich erstreckende Breite der Schürze (7) eine Mehrzahl von Heißwasserkanälen (13) an der Unterseite des unteren Endabschnitts (7a) der Schürze (7) münden, welche bezogen auf die Richtung quer zur Fahrtrichtung (14) voneinander beabstandet sind.

3. Vorrichtung nach Anspruch 1 oder 2, **dadurch gekennzeichnet, dass** die Schürze (7) in der auf die Richtung quer zur Fahrtrichtung (14) bezogenen Breite der Schürze (7) durch mindestens einen vom unteren Ende der Schürze (7) über einen Teil der Höhe der Schürze (7) sich erstreckenden Schlitz (7b) in mindestens zwei an ihr unteres Ende anschließende Teilbereiche unterteilt ist, wobei in jedem Teilbereich mindestens ein Heißwasserkanal (13) mündet.

4. Vorrichtung nach einem der Ansprüche 1 bis 3, **dadurch gekennzeichnet, dass** die Vorrichtung zumindest eine rechtwinkelig zur Fahrtrichtung sich erstreckende Reihe von Schürzen (7) aufweist.

5. Vorrichtung nach einem der Ansprüche 1 bis 4, **dadurch gekennzeichnet, dass** die Tragstruktur (8) in der Höhe verstellbar ist.

6. Vorrichtung nach einem der Ansprüche 1 bis 5, **dadurch gekennzeichnet, dass** die Vorrichtung mindestens einen Verteiler (18) aufweist, der einen Verteilerraum (18a) besitzt, in welchen ein Zuführkanal (19) für Heißwasser mündet und von welchem mehrere Heißwasserkanäle (13) ausgehen, deren Öffnungsquerschnitte kleiner sind als der Öffnungsquerschnitt des Zuführkanals (19).

7. Vorrichtung nach Anspruch 6, **dadurch gekennzeichnet, dass** jeder Schürze (7) ein Verteiler (18) zugeordnet ist, wobei die vom Verteilerraum (18a) ausgehenden Heißwasserkanäle (13) an der Unterseite des unteren Endabschnitts (7a) dieser Schürze (7) münden.

8. Vorrichtung nach Anspruch 6 oder 7, **dadurch gekennzeichnet, dass** die Zufuhr von Heißwasser durch einen jeweiligen Zuführkanal (19) mittels eines jeweiligen Ventils (20) absperrbar ist.

9. Vorrichtung nach Anspruch 8, **dadurch gekennzeichnet, dass** die Vorrichtung mindestens eine Kamera (22) aufweist, deren erfasstes Bild von einer mindestens einen Mikroprozessor aufweisenden Steuereinheit (21) zur Erkennung von Unkraut ausgewertet wird, wobei die Steuereinheit (21) in Abhängigkeit erkanntem Unkraut die Ventile (20) betätigt.

10. Vorrichtung nach einem der Ansprüche 6 bis 9, **dadurch gekennzeichnet, dass** dem mindestens einen Zuführkanal (19) Heißwasser aus einem Speicher (5) zugeführt wird, welchem Heißwasser von einem Boiler (3) zugeführt wird.

## Claims

1. Device for eliminating weeds, comprising a boiler (3) for heating water and an application device for applying hot water to weeds that are to be eliminated, said application device being movable in a direction of travel (14) over ground (12) that has the weeds to be eliminated, the application device having a plurality of flexible skirts (7), which are suspended at top ends from a support structure (8) of the device and, owing to their flexibility, rest on the ground (12) by a bottom end portion (7a) when the device is in the operational state in which it is dragged over the ground (12) in the direction of travel (14), at least one hot water conduit (13) opening on the underside of said bottom end portion (7a) of each skirt (7), and the skirts (7) being arranged with an offset in the direction at right angles to the direction of travel (14) and the device being configured such that the skirts (7) are adjustable between a resting state, in which the skirts (7) are raised, the bottom ends of the skirts (7) being located above the ground, and the operational state, in which the skirts (7) are lowered, **characterised in that** the device is configured such that the skirts (7) can be dragged over the ground (12) in the operational state.

2. Device according to claim 1, **characterised in that** over the width of the skirt (7), said width extending transversely to the direction of travel (14), a plurality of hot water conduits (13) open on the underside of the bottom end portion (7a) of the skirt (7) and are spaced apart from one another in relation to the direction transverse to the direction of travel (14).

3. Device according to claim 1 or claim 2, **characterised in that** in the width of the skirt (7), said width being based on the direction transverse to the direction of travel (14), the skirt (7) is split, by at least one slot (7b) extending from the bottom end of the skirt (7) over part of the height of the skirt (7), into at least two portions which adjoin the bottom end of said skirt, at least one hot water conduit (13) opening in each portion.

4. Device according to any of claims 1 to 3, **characterised in that** the device has at least one row of skirts (7) extending at right angles to the direction of travel.

5. Device according to any of claims 1 to 4, **characterised in that** the support structure (8) is height-adjustable.

6. Device according to any of claims 1 to 5, **characterised in that** the device has at least one manifold (18), which has a manifold chamber (18a) into which a supply conduit (19) for hot water opens and from which a plurality of hot water conduits (13) start, the opening cross-sections of which are smaller than the opening cross section of the supply conduit (19).

7. Device according to claim 6, **characterised in that** each skirt (7) is assigned one manifold (18), the hot water conduits (13) that start from the manifold chamber (18a) opening on the underside of the bottom end portion (7a) of that skirt (7).

8. Device according to claim 6 or claim 7, **characterised in that** the supply of hot water through each supply conduit (19) can be shut off by means of a respective valve (20).

9. Device according to claim 8, **characterised in that** the device has at least one camera (22), the image captured by which is evaluated by a control unit (21) having at least one microprocessor in order to detect weeds, the control unit (21) actuating the valves (20) depending on whether weeds are detected.

10. Device according to any of claims 6 to 9, **characterised in that** hot water is supplied to the at least one supply conduit (19) from a reservoir (5), to which hot water is supplied by a boiler (3).

## Revendications

1. Dispositif de destruction des mauvaises herbes, comprenant
un chauffe-eau (3) pour chauffer de l'eau et
un dispositif d'application pour appliquer de l'eau chaude sur les mauvaises herbes à détruire, lequel dispositif peut être déplacé dans une direction de déplacement (14) au-dessus d'un sol (12) présentant les mauvaises herbes à détruire, le dispositif d'application étant muni de plusieurs jupes flexibles (7) qui sont suspendues à leurs extrémités supérieures à une structure porteuse (8) du dispositif et qui, à l'état de fonctionnement du dispositif dans lequel elles sont traînées sur le sol (12) dans la direction de déplacement (14), reposent sur le sol (12) avec une section d'extrémité inférieure (7a) en raison de leur flexibilité, au moins un canal d'eau chaude (13) débouchant sur le côté inférieur de cette section d'extrémité inférieure (7a) de la jupe (7) respective, et les jupes (7) étant disposées de manière décalée dans une direction perpendiculaire à la direction de déplacement (14), et le dispositif étant conçu de telle sorte que les jupes (7) peuvent être réglées entre un état de repos, dans lequel les jupes (7) sont soulevées, les extrémités inférieures des jupes (7) se trouvant au-dessus du sol, et l'état de fonctionnement dans lequel les jupes (7) sont abaissées, **caractérisé en ce que** le dispositif est conçu de telle sorte qu'à l'état de fonctionnement, les jupes (7) peuvent être traînées sur le sol (12).

2. Dispositif selon la revendication 1, **caractérisé en ce que** le long de la largeur de la jupe (7) s'étendant transversalement à la direction de déplacement (14) débouchent une pluralité de canaux d'eau chaude (13) sur le côté inférieur de la section d'extrémité inférieure (7a) de la jupe (7), lesquels canaux sont espacés les uns des autres par rapport à la direction transversale à la direction de déplacement (14).

3. Dispositif selon la revendication 1 ou 2, **caractérisé en ce que** dans la largeur de la jupe (7) par rapport à la direction transversale à la direction de déplacement (14), la jupe (7) est divisée par au moins une fente (7b) s'étendant depuis l'extrémité inférieure de la jupe (7) sur une partie de la hauteur de la jupe (7), en au moins deux zones partielles se raccordant à son extrémité inférieure, au moins un canal d'eau chaude (13) débouchant dans chaque zone partielle.

4. Dispositif selon l'une des revendications 1 à 3, **caractérisé en ce que** le dispositif est muni d'au moins une rangée de jupes (7) s'étendant perpendiculairement à la direction de déplacement.

5. Dispositif selon l'une des revendications 1 à 4, **caractérisé en ce que** la structure porteuse (8) est réglable en hauteur.

6. Dispositif selon l'une des revendications 1 à 5, **caractérisé en ce que** le dispositif comporte au moins un distributeur (18) qui possède une chambre de distribution (18a) dans laquelle débouche un canal d'alimentation (19) en eau chaude, et d'où partent plusieurs canaux d'eau chaude (13) dont les sections d'ouverture sont inférieures à la section d'ouverture du canal d'alimentation (19).

7. Dispositif selon la revendication 6, **caractérisé en ce qu'à** chaque jupe (7) est associé un distributeur (18), les canaux d'eau chaude (13) partant de la chambre de distribution (18a) débouchant sur le côté inférieur de la portion d'extrémité inférieure (7a) de cette jupe (7).

8. Dispositif selon la revendication 6 ou 7, **caractérisé en ce que** l'alimentation en eau chaude par un canal d'alimentation (19) respectif peut être interrompue au moyen d'une vanne (20) respective.

9. Dispositif selon la revendication 8, **caractérisé en ce que** le dispositif est muni d'au moins une caméra (22) dont l'image captée est analysée par une unité de commande (21) munie d'au moins un microprocesseur pour détecter les mauvaises herbes, l'unité de commande (21) actionnant les vannes (20) en fonction des mauvaises herbes détectées.

10. Dispositif selon l'une des revendications 6 à 9, **caractérisé en ce que** ledit au moins un canal d'alimentation (19) est alimenté en eau chaude à partir d'un réservoir (5) auquel de l'eau chaude est fournie par un chauffe-eau (3).
